# FASCICULE DE BREVET EUROPEEN

(11) **EP 0 658 470 B1**
(45) Date de publication et mention de la délivrance du brevet: **07.05.1997**
(21) Numéro de dépôt: 94402604.6
(22) Date de dépôt: 16.11.1994
(51) Int. Cl.: B62D 25/08, B60K 11/08

(54) **Bâti-support pour façade de véhicule automobile**
Tragwerk für die Frontseite von Kraftfahrzeugen
Support structure for motor car front end

(30) Priorité: 15.12.1993 FR 9315116
(43) Date de publication de la demande: 21.06.1995
(73) Titulaire: ECIA - EQUIPEMENTS ET COMPOSANTS POUR L'INDUSTRIE AUTOMOBILE, F-25400 Audincourt (FR)
(72) Inventeur: Laurent, Claude, F-25420 Voujeaucourt (FR); Trassaert, Patrick, F-25400 Audincourt (FR); Pata, Martial, F-25420 Voujeaucourt (FR)
(74) Mandataire: Polus, Camille

(56) Documents cités:
- EP-A- 0 437 780
- DE-A- 3 433 935
- FR-A- 2 655 605
- PATENT ABSTRACTS OF JAPAN vol. 16 no. 103 (M-1221) [5146] ,13 Mars 1992 & JP-A-03 279084 (MAZDA) 10 Décembre 1991,

## Description

La présente invention concerne les véhicules automobiles et est relative, plus particulièrement, à un bâti-support pour façade antérieure de véhicule automobile qui peut notamment servir de base d'assemblage.

La tendance contemporaine des techniques de montage des véhicules automobiles fait, de plus en plus, appel à des robots ou à des automates programmables qui se substituent, progressivement, aux opérateurs travaillant sur les chaînes de production, et cela pour des interventions de plus en plus nombreuses et complexes.

Actuellement, au lieu de monter, les uns après les autres, les divers constituants sur la structure ou coque d'un véhicule, on tend à préassembler ces divers constituants en sous-ensembles et ensembles qui, après avoir été réunis en entités et éventuellement vérifiés, sont placés tels quels et réunis à la structure ou coque du véhicule.

Une solution de structure modulaire pour véhicule est, par exemple, exposée dans le document FR 2 615 156.

Une telle technique, pour séduisante qu'elle soit, n'est pas sans présenter d'inconvénients en particulier lorsqu'il s'agit de la façade antérieure d'un véhicule automobile.

Comme on le sait, une telle façade antérieure sert, habituellement, à réunir les flancs de la structure et des éléments de carrosserie tels que des ailes, pare-chocs, calandres. Cette façade doit aussi être à même de supporter des équipements tels que des blocs optiques, un pulseur d'air simple ou multiple, un filtre à air, un avertisseur sonore, etc...

Des tentatives ont déjà été faites pour construire une telle façade qui réussit, tant bien que mal, à allier des desiderata quelque peu contradictoires. Une telle tentative est, par exemple, illustrée par le document FR 2 625 164. Dans ce document, on traite d'un élément transversal frontal, amovible sur une coque de véhicule, et destiné à recevoir des éléments de remplissage latéraux telles des ailes, à l'aide de jonctions amovibles. Cet élément transversal frontal a une forme en U inversé et est constitué de boîtiers en coque pour les feux, et d'une traverse supérieure transversale; ces boîtiers et traverse sont joints par des jonctions amovibles. Cet élément transversal frontal est obtenu par la réunion de composants qui sont assemblés par des jonctions amovibles de manière à constituer un élément auto-porteur; cet élément est fait à partir de composants en tôles métalliques ou en matériaux synthétiques renforcés à l'aide de charges ou de fibres de verre et est préassemblé. Comme on peut le constater à la lecture de ce document, cet élément transversal frontal est destiné à être réuni à la coque en utilisant une traverse inférieure transversale. On observera aussi que cet élément transversal frontal est fait de composants différents qu'il faut au préalable associer avant d'obtenir un élément autoporteur qui peut être joint à la coque ou structure.

On imagine sans difficulté les problèmes que pose ce type d'assemblage fait de la réunion de composants juxtaposés et fixés les uns des autres, en particulier lorsqu'il faut respecter des tolérances d'assemblage relativement sévères pour le tout.

Le but de l'invention est de remédier aux difficultés de ce type rencontrées à l'occasion de la mise en oeuvre de la technique relatée par ce document.

Le bâti-support plus spécialement pour façade antérieure de véhicule automobile, selon l'invention est conçu de manière à constituer une pièce de structure qui assure la cohésion des flancs droit et gauche du véhicule et qui est de même apte à participer à la résistance du véhicule en contribuant au besoin à subir une déformation générale du véhicule en cas de chocs importants notamment frontaux. De plus, ce bâti-support pour façade antérieure de véhicule automobile selon l'invention joue le rôle de servante, desserte notamment d'atelier puisque étant naturellement autoporteur il peut servir à réunir et regrouper pratiquement tous les équipements qu'il doit recevoir.

L'invention a pour objet un bâti-support pour façade antérieure de véhicule automobile qui est destiné à être monté sur une coque-structure avec des longerons latéraux d'extrémité, qui est adapté à recevoir notamment des éléments de carrosserie telles des ailes, pare-chocs, calandre, serrure de capot et qui est apte à être pourvu d'équipements tels des blocs optiques, un pulseur d'air, un filtre à air, un avertisseur sonore, ce bâti-support qui comprend un panneau frontal relativement plan fait à base d'une résine synthétique avec deux côtés opposés latéraux approximativement verticaux et deux bords opposés haut et bas approximativement horizontaux et avec des faces avant et arrière, est caractérisé en ce qu'il comprend en outre une charpente métallique avec une poutre de configuration en U qui présente deux branches latérales proches des côtés opposés et une barre transversale réunissant ces branches et proche de ce bord bas et avec des socles aptes à être fixés aux longerons de la coque-structure.

D'autres particularités et avantages de l'invention ressortiront de la lecture de la description et des revendications qui suivent, ainsi que de l'examen du dessin annexé, donné seulement à titre d'exemple, où:
- la Figure 1 est une vue perspective, observée de l'avant, d'un mode de réalisation d'un bâti-support pour façade antérieure de véhicule automobile selon l'invention qui est prééquipé et prêt à être associé à une coque-structure illustrée partiellement et schématiquement éclatée;

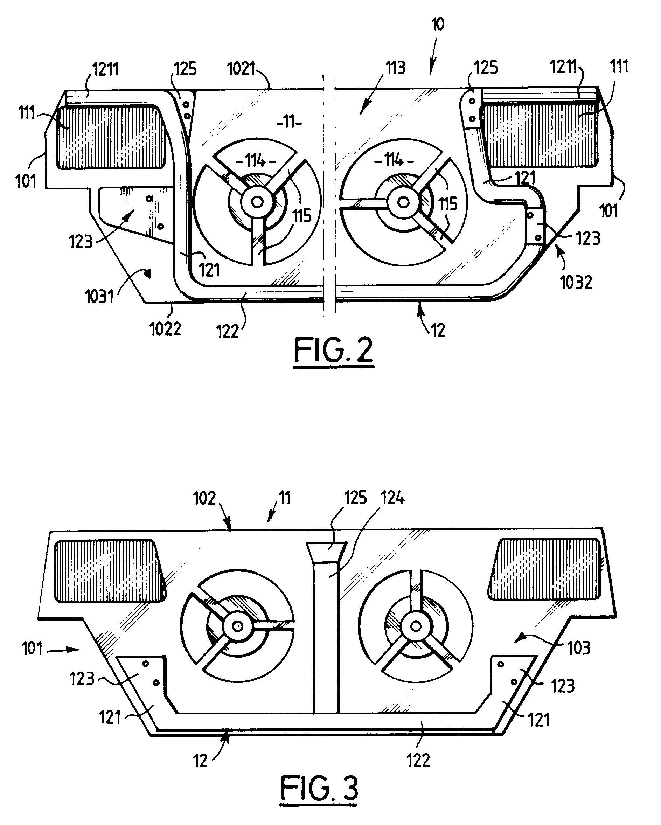

- la Figure 2 est une vue de face schématique d'un mode de réalisation d'un bâti-support selon l'invention;
- la Figure 3 est une vue analogue à celle de la Figure 2 d'un autre mode de réalisation d'un bâti-support selon l'invention;

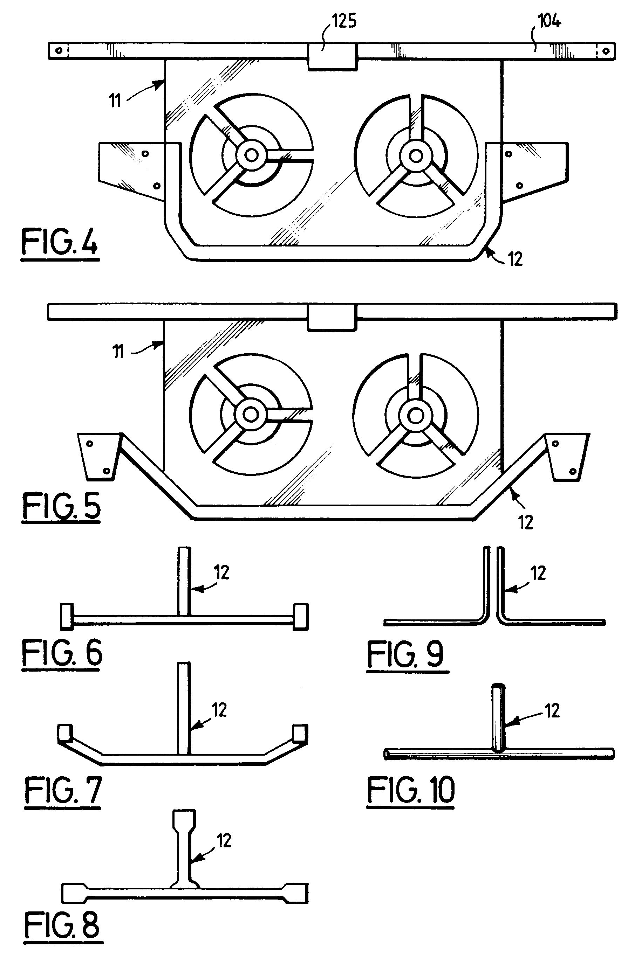

- les Figures 4 et 5 sont des vues analogues à celles des Figures 2 et 3 d'autres modes de réalisation d'un bâti-support selon l'invention; et
- les Figures 6 à 10 sont des vues partielles de détail de modes de réalisation de charpente d'un bâti-support selon l'invention.

Les techniques de construction, de montage et d'assemblage des véhicules automobiles étant bien connues dans la technique, ce qui suit est limité à ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans la description qui suit, un même numéro de référence identifie toujours un élément homologue, quel que soit le mode de réalisation ou sa variante d'exécution.

Pour la commodité de l'exposé, on décrira successivement chacun des constituants d'un bâti-support selon l'invention avant d'en exposer la fabrication au besoin, et la mise en oeuvre.

Dans ce qui suit, toutes les indications relatives à une orientation telles que avant, arrière, antérieur, postérieur, haut, bas, latéral, etc sont faites par rapport aux axes traditionnels d'un véhicule en situation de circuler.

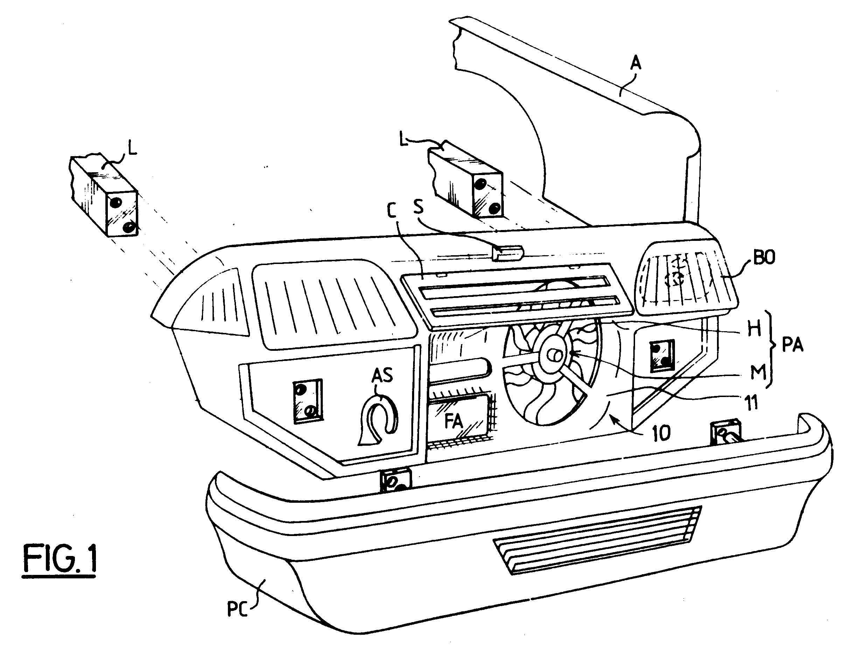

Un bâti-support pour façade antérieure de véhicule automobile selon l'invention est destiné à être monté sur une coque-structure, habituellement mécano-soudée, comme il est classique. Une telle coque-structure présente, généralement, des longerons L latéraux d'extrémité au moins à la partie avant de ce que sera le véhicule. Ces longerons latéraux forment un brancard ou similaire et servent de berceau pour recevoir un groupe mototracteur et tout ce qui lui est associé. Une telle coque-structure est revêtue d'éléments de carrosserie tels que des ailes A, un pare-choc PC, une calandre C, un capot avec serrure S, etc.. Ceci est illustré schématiquement sur la Figure 1.

La partie antérieure d'un véhicule automobile comprend aussi des équipements les uns apparents et les autres masqués, par exemple, par le capot et la calandre. Ce type d'équipement est, par exemple, représenté par des blocs optiques BO avec, entre autres, une glace, un réflecteur, une douille à ampoule, un dispositif de réglage, un pulseur d'air PA simple ou multiple avec entre autres au moins une hélice H et un moteur M, un filtre à air FA avec une cartouche filtrante, un avertisseur sonore AS, etc.

Tout ce dont il vient d'être question est des plus classiques, c'est pourquoi on ne s'y attardera pas davantage.

En se reportant aux diverses figures du dessin, on voit qu'un bâti-support 10 selon l'invention comprend, essentiellement, un panneau 11 et une charpente 12.

Le panneau 11 frontal, relativement plan, présente deux côtés 101 opposés latéraux approximativement verticaux, et deux bords 102 opposés haut 1021 et bas 1022, approximativement horizontaux. Un tel panneau a deux faces 103 opposées, une face avant 1031 et une face arrière 1032.

Comme on peut le noter, le panneau 11 au besoin présente, à proximité de chacun de ces côtés 101, un cuvelage 111 ou similaire qui est par exemple saillant sur la face arrière 1032 et qui tourne sa concavité vers la face avant 1031. Ce sont ces cuvelages 111 qui sont destinés à recevoir chacun un bloc optique BO.

S'il y a lieu, chaque cuvelage 111 comprend à sa périphérie, sur la face avant 1031, une bordure pour recevoir la glace du bloc optique qui y est maintenue par exemple par collage. Il est clair que le bloc optique peut être monté de toute autre manière appropriée, par exemple vissage ou encliquetage élastique de manière à être totalement ou partiellement démontable afin de faciliter les opérations d'entretien ou de remplacement. Ce cuvelage 111 présente une paroi intérieure pour le réflecteur qui, par exemple, est métallisé directement sur la paroi concave. Le cuvelage 111 présente aussi un orifice transperçant la concavité pour le passage de la douille à lampe avec, éventuellement, un dispositif de réglage.

Comme on peut le voir, le panneau 11 présente, entre ses cotés 101 et de préférence entre ses cuvelages 111, une zone 113 médiane destinée à recevoir le pulseur d'air PA simple ou multiple. A cet effet, la zone médiane 113 du panneau 11 est transpercée d'au moins un ajour 114 avec des bras 115 par exemple radiaux, pour le montage et la fixation du moteur d'un groupe motoventilateur. S'il y a lieu, le panneau présente aussi une cuvette qui est par exemple saillante sur la face avant 1031 et qui est concave sur la face arrière 1032. Cette cuvette 114 est destinée à recevoir un filtre à air, de tout type courant. Ce filtre à air comprend, par exemple, une cartouche filtrante maintenue en place par un couvercle mobile ou amovible retenu par des moyens de fixation tels des vis ou des pinces. Cette cuvette et ce couvercle sont transpercés aux endroits appropriés d'ouïes et évents convenables pour la circulation et le prélèvement de l'air.

On notera aussi que ce panneau 11 présente au besoin par exemple dans la région de l'un de ses côtés, une empreinte qui est par exemple saillante sur la face avant 1031 et concave sur la face arrière 1032. C'est cette empreinte qui est destinée à recevoir l'avertisseur sonore AS.

Si nécessaire, la zone médiane 113 comprend sur la face arrière 1032, à proximité du bord haut 1021, une traverse 104.

La charpente 12, métallique comprend une poutre de configuration générale en U plus ou moins évasé pouvant aboutir à un T inverse, en vue de face. La charpente 12 présente deux branches 121 latérales avec chacune un bout 1211 libre et une barre 122 transversale réunissant les branches latérales.

Chaque branche latérale 121 est pourvue d'un socle 123 ou similaire destiné au montage et à la réunion au longeron L correspondant à l'aide de tous moyens de fixation appropriés connus classiques qui comprennent des vis ou boulons et des écrous ou trous taraudés, comme illustré.

S'il y a lieu, l'une au moins des branches latérales 121 est coudée voire contre-coudée pour envelopper au moins partiellement un cuvelage 111.

Au besoin, la charpente 12 comprend aussi une jambe 124 médiane de préférence pratiquement perpendiculaire à la barre 122 et s'étendant vers le bord haut 1021, entre les branches latérales 121. S'il y a lieu cette jambe est plus longue que les branches.

Cette poutre a, en section droite, par exemple un profil en U, circulaire ou autre

Le bâti-support et plus particulièrement la charpente 12 est, de préférence, équipée d'au moins une platine 125 destinée à recevoir une partie de la serrure de capot. Cette platine est située à l'extrémité de la jambe 124 opposée à la barre 122 et/ou sur l'une ou les deux branches latérales 121.

De préférence, le bâti-support selon l'invention est aussi équipé d'embases aptes à recevoir le pare-chocs. Ces embases font corps avec les socles ou sont rapportées et placées dans leur prolongement. Le pare-chocs est monté avec interposition de tampons absorbeurs d'énergie si nécessaire.

On notera que les branches latérales sont proches des côtés opposés et que la barre transversale est proche du bord bas. On notera aussi que les branches latérales sont symétriques ou dissymétriques.

Ce bâti-support 10 comprend, aussi, au moins une plage pour des connecteurs électriques faits de conducteurs et de raccords.

S'il y a lieu, ce bâti-support est équipé de nervures de raidissement aux endroits appropriés.

De préférence, le panneau frontal d'un tel bâti-support selon l'invention est fait essentiellement de matériaux synthétiques dont les propriétés sont modifiées, au besoin, à l'aide de charges et/ou de fibres de renfort, par exemple des fibres de verre.

Ces matériaux synthétiques sont mis en forme par moulage ou formage selon leur nature.

On utilise, par exemple, des matériaux désignés dans la technique sous l'appellation SMC (Sheet Moulding Compound) ou TRE (Thermoplastique Renforcé Estampable). On peut aussi utiliser des polyesters et lorsqu'on fait appel à l'injection des polypropylènes, des polyamides ou des polybutadiène polyterephtalate, etc.

Suivant le matériau utilisé et les propriétés à lui conférer, on met en oeuvre des techniques de moulage soit par compression soit par injection, ou d'autres techniques usuelles en fonction de la dimension des pièces à obtenir.

La charpente métallique d'un seul tenant ou non d'un tel bâti-support selon l'invention, est faite essentiellement de tubes, tôles embouties ou similaires mis en forme selon des techniques classiques appropriées et réunies par vissage, rivetage, agrafage, soudage, collage ou similaires. Cette charpente métallique est, si nécessaire, munie de pattes dont la conformation, la position et le nombre judicieusement choisis, permettent une bonne liaison et cohésion avec le panneau frontal.

Le panneau frontal est, par exemple, surmoulé sur la charpente qui y est noyée ou bien confectionné indépendamment de celle-ci et, dans ce dernier cas, y est rapporté et fixé par exemple par vissage, rivetage, collage, emboîtage élastique ou similaire dans des rainures, gorges, logements ou analogues.

De ce qui précède, on constate immédiatement que le bâti-support selon l'invention sert en quelque sorte de pièce noyau d'assemblage qui joue aussi le rôle d'une servante ou d'une desserte d'atelier pour supporter notamment des blocs optiques, un pulseur d'air, un filtre à air, un avertisseur sonore, un pare-chocs, une grille de calandre, des connecteurs et une serrure, etc, comme indiqué.

On saisit clairement que le bâti-support selon l'invention a aussi un rôle structurel de cohésion des flancs latéraux en liant les longerons latéraux, et qu'il peut absorber une certaine énergie en cas de chocs notamment frontal, et assurer la répartition de cette énergie en vue de sa dissipation sans dommages pour les occupants.

Du fait que ce bâti-support soit fabriqué pour former une entité, il est relativement aisé d'obtenir des tolérances de fabrication serrées et une bonne reproductibilité.

De plus, ce bâti-support peut jouer un rôle de barrière acoustique et contribuer à canaliser des flux d'air et, par la même, à améliorer le refroidissement. De par sa nature, ce bâti-support participe à l'amélioration du confort en absorbant des vibrations et en réduisant le bruit, de même qu'il contribue à l'étanchéité et à la protection du moteur.

Par le choix des matériaux dont il est fait, le bâti-support selon l'invention est apte à supporter des "points chauds" à température élevée, de l'ordre de 150°C par exemple, tels que ceux qui se manifestent à proximité des blocs optiques.

On comprend donc tout l'intérêt d'un bâti-support selon l'invention dans l'industrie automobile et tous les avantages qu'il apporte.

## Revendications

1. Bâti-support pour façade antérieure de véhicule automobile qui est destiné à être monté sur une coque-structure du véhicule qui présente des longerons latéraux d'extrémité, et qui est adapté à recevoir notamment des éléments de carrosserie telles des ailes, pare-chocs, calandre, serrure de capot et qui est apte à être pourvu d'équipements tels notamment des blocs optiques, un pulseur d'air, un filtre à air, un avertisseur sonore, ce bâti-support (10) qui comprend un panneau (11) frontal relativement plan fait à base d'une résine synthétique avec deux côtés (101) opposés latéraux approximativement verticaux et deux bords (102) opposés haut (1021) et bas (1022) approximativement horizontaux et avec des faces (103) avant et arrière, est caractérisé en ce qu'il comprend en outre une charpente (12) métallique avec une poutre de configuration en U qui présente deux branches (121) latérales proches des côtés opposés (101) et une barre (122) transversale réunissant ces branches (121) et proche de ce bord bas (1022), et avec des socles (123) aptes à être fixés aux longerons de la coque-structure.

2. Bâti-support selon la revendication 1, caractérisé en ce que les branches latérales (121) sont dissymétriques.

3. Bâti-support selon la revendication 1 ou 2, caractérisé en ce que la charpente métallique (12) comprend une jambe (124) médiane pratiquement perpendiculaire à la barre transversale (122) et s'étendant vers le bord haut (1021) entre les branches latérales (121).

4. Bâti-support selon la revendication 3, caractérisé en ce que la jambe médiane (124) est plus longue que les branches latérales (121).

5. Bâti-support selon l'une quelconque des revendications 1 à 4, caractérisé en ce que les socles (123) sont portés par les branches latérales (121).

6. Bâti-support selon l'une quelconque des revendications 1 à 5, caractérisé en ce que le panneau frontal (11) présente à proximité de chacun de ses côtés latéraux (101) et bord haut (1021) un cuvelage (111) apte à recevoir un bloc optique et en ce que l'une au moins de ces branches latérales (121) est coudée pour envelopper au moins partiellement le cuvelage (111).

7. Bâti-support selon l'une quelconque des revendications 1 à 6, caractérisé en ce que la charpente métallique (12) comprend au moins une platine (125) apte à recevoir une serrure de capot.

8. Bâti-support selon la revendication 7, caractérisé en ce que cette platine (125) est portée par l'une de ces branches latérales (121).

9. Bâti-support selon la revendication 7 ou 8, caractérisé en ce que cette platine (125) est portée par la jambe médiane (124).

10. Bâti-support selon l'une quelconque des revendications 1 à 9, caractérisé en ce qu'il présente des embases aptes à recevoir un pare-chocs.

11. Bâti-support selon la revendication 10, caractérisé en ce que ces embases et ces socles (123) sont dans le prolongement les uns des autres.

12. Bâti-support selon l'une quelconque des revendications 1 à 11, caractérisé en ce que le panneau central (11) présente une zone (113) médiane qui est destinée à recevoir un pulseur d'air et qui est transpercée d'au moins un ajour (114).

13. Bâti-support selon la revendication 12, caractérisé en ce que cet ajour (114) est pourvu d'au moins un bas (115) pour recevoir un groupe moto-ventilateur.

14. Bâti-support selon la revendication 12 ou 13, caractérisé en ce que la zone médiane (113) est pourvue d'une cuvette apte à recevoir un filtre à air.

15. Bâti-support selon l'une quelconque des revendications 12 à 14, caractérisé en ce que la zone médiane (113) est pourvue d'une empreinte apte à recevoir un avertisseur sonore.

## Claims

1. A support structure for the front of a motor vehicle intended for mounting on the vehicle shell structure provided with end side members, and adapted to receive in particular bodywork members such as the wings, bumper, radiator grille and bonnet lock and providable in particular with equipment such as the headlamp assemblies, an air blower, an air filter and a horn, the said support structure (10) comprising a relatively flat, synthetic-resin-based front panel (11) having two substantially vertical opposing lateral sides (101) and two substantially horizontal upper (1021) and lower (1022) opposing edges (102) and having front and rear surfaces (103), characterised in that it also comprises a metal frame (12) comprising a U-shaped girder having two lateral arms (121) in proximity to the opposing sides (101), and a transverse bar (122) connecting the arms (121) in proximity to the lower edge (1022), and comprising mounting plates (123) fixable to the side members of the shell structure.

2. A support structure according to claim 1, characterised in that the lateral arms (121) are asymmetrical.

3. A support structure according to claim 1 or 2, characterised in that the metal frame (12) comprises a central leg (124) substantially perpendicular to the transverse bar (122) and extending towards the upper edge (1021) between the lateral arms (121).

4. A support structure according to claim 3, characterized in that the central leg (124) is longer than the lateral arms (121).

5. A support structure according to any one of claims 1 to 4, characterised in that the mounting plates (123) are carried by the lateral arms (121).

6. A support structure according to any one of claims 1 to 5, characterised in that the front panel (11) has a casing (111) arranged in proximity to each of its lateral sides (101) and the upper edge (1021) and intended to receive a headlamp assembly, and in that at least one of the lateral arms (121) is bent so as to surround at least part of the casing (111).

7. A support structure according to any one of claims 1 to 6, characterised in that the metal frame (12) comprises at least one plate (125) for receiving a bonnet lock.

8. A support structure according to claim 7, characterised in that the plate (125) is carried by one of the lateral arms (121).

9. A support structure according to claim 7 or 8, characterised in that the plate (125) is carried by the central leg (124).

10. A support structure according to any one of claims 1 to 9, characterised in that it has base plates for receiving a bumper.

11. A support structure according to claim 10, characterised in that the base plates and mounting plates (123) are a continuation of one another.

12. A support structure according to any one of claims 1 to 11, characterised in that the central panel (11) has a centre region (113) for receiving an air blower and pierced by at least one opening (114).

13. A support structure according to claim 12, characterised in that the opening (114) is provided with at least one arm (115) for receiving a motor-driven fan unit.

14. A support structure according to claim 12 or 13, characterised in that the centre region (113) is provided with a trough for receiving an air filter.

15. A support structure according to any one of claims 12 to 14. characterised in that the centre region (113) is provided with a recess for receiving a horn.

## Patentansprüche

1. Tragwerk für die Frontseite von Kraftfahrzeugen, welches dazu bestimmt ist, an einem Fahrzeug-Karosserieaufbau angebracht zu werden, der seitliche Längs-Endträger aufweist, und welches dazu ausgelegt ist, insbesondere Karosserieelemente aufzunehmen, so wie Kotflügel, Stoßfänger, Kühlerverkleidung, Haubenschloß, und welches man mit Zubehörteilen versehen kann, wie insbesondere Optik-Blöcken, einem Lüfterrad, einem Luftfilter, einer Hupe, wobei das Tragwerk (10), das eine relativ ebene Vorderplatte (11), die auf Grundlage eines Kunstharzes hergestellt ist, mit zwei gegenüberliegenden Seitenflächen (101), die ungefähr vertikal verlaufen, und zwei gegenüberliegenden Kanten (102), einer oberen (1021) und einer unteren (1022), die ungefähr horizontal verlaufen, und mit einer Vorder- und Rückfläche (103) aufweist, dadurch gekennzeichnet ist, daß es weiterhin eine Metallkonstruktion (12) mit einem Träger in Gestalt eines U, welcher zwei seitliche Schenkel (121) nahe den gegenüberliegenden Seiten (101) und eine Quer strebe (122), die die Schenkel (121) verbindet und nahe dieser unteren Kante (1022) liegt, umfaßt, und mit Sockeln (123), die an den Trägern des Karosserieaufbaus befestigt werden können, aufweist.

2. Tragwerk nach Anspruch 1, dadurch gekennzeichnet, daß die seitlichen Schenkel (121) asymmetrisch sind.

3. Tragwerk nach Anspruch 1 oder 2, dadurch gekennzeichnet, daß die Metallkonstruktion (12) ein mittleres Bein (124) aufweist, das praktisch senkrecht zu der Querstrebe (122) verläuft und sich zwischen den seitlichen Schenkeln (121) zur oberen Kante (1021) hin erstreckt.

4. Tragwerk nach Anspruch 3, dadurch gekennzeichnet, daß das mittlere Bein (124) länger ist als die seitlichen Schenkel (121).

5. Tragwerk nach einem der Ansprüche 1 bis 4, dadurch gekennzeichnet, daß die Sockel (123) von den seitlichen Schenkeln (121) getragen werden.

6. Tragwerk nach einem der Ansprüche 1 bis 5, dadurch gekennzeichnet, daß die Frontplatte (11) in der Nähe jeder ihrer Seitenflächen (101) und der oberen Kante (1021) eine Schale (111) aufweist, die einen Optik-Block aufnehmen kann, und daß wenigstens einer dieser seitlichen Schenkel (121) gekrümmt ist, um wenigstens teilweise die Schale (111) einzuschließen.

7. Tragwerk nach einem der Ansprüche 1 bis 6, dadurch gekennzeichnet, daß die Metallkonstruktion (12) wenigstens eine Halteplatte (125) aufweist, die ein Haubenschloß aufnehmen kann.

8. Tragwerk nach Anspruch 7, dadurch gekennzeichnet, daß diese Halteplatte (125) von einem dieser seitlichen Schenkel (121) getragen wird.

9. Tragwerk nach Anspruch 7 oder 8, dadurch gekennzeichnet, daß diese Halteplatte (125) von dem mittleren Bein (124) getragen wird.

10. Tragwerk nach einem der Ansprüche 1 bis 9, dadurch gekennzeichnet, daß es Befestigungsflächen aufweist, die einen Stoßfänger aufnehmen können.

11. Tragwerk nach Anspruch 10, dadurch gekennzeichnet, daß diese Befestigungsflächen und diese Sockel (123) in ihrer gegenseitigen Vorlängerung angeordnet sind.

12. Tragwerk nach einem der Ansprüche 1 bis 11, dadurch gekennzeichnet, daß die Mittelplatte (11) einen mittleren Bereich (113) aufweist, der dazu bestimmt ist, ein Lüfterrad aufzunehmen, und der von wenigstens einer Öffnung (114) durchsetzt ist.

13. Tragwerk nach Anspruch 12, dadurch gekennzeichnet, daß diese Öffnung (114) mit wenigstens einom Unterteil (115) versehen ist, um einen Lüftersatz aufzunehmen.

14. Tragwerk nach Anspruch 12, dadurch gekennzeichnet, daß der mittlere Bereich (113) mit einer Schale versehen ist, die einen Luftfilter aufnehmen kann.

15. Tragwerk nach einem der Ansprüche 12 bis 14, dadurch gekennzeichnet, daß der mittlere Bereich (113) mit einer Vertiefung versehen ist, die eine Hupe aufnehmen kann.
